# FASCICULE DE BREVET EUROPEEN

(11) **EP 4 030 043 B1**
(45) Date de publication et mention de la délivrance du brevet: **20.03.2024**
(21) Numéro de dépôt: 22150840.1
(22) Date de dépôt: 11.01.2022
(51) Int. Cl.: F02C 7/25, F02C 7/18

(54) **ENSEMBLE PROPULSIF POUR AÉRONEF COMPORTANT UN SYSTÈME DE VENTILATION ET UN SYSTÈME ANTI-INCENDIE**
ANTRIEBSEINHEIT FÜR LUFTFAHRZEUG, DIE EIN BELÜFTUNGSSYSTEM UND EIN BRANDSCHUTZSYSTEM UMFASST
PROPULSION ASSEMBLY FOR AIRCRAFT COMPRISING A VENTILATION SYSTEM AND A FIRE PROTECTION SYSTEM

(30) Priorité: 14.01.2021 FR 2100337
(43) Date de publication de la demande: 20.07.2022
(73) Titulaire: AIRBUS OPERATIONS, 31060 Toulouse Cedex 9 (FR)
(72) Inventeur: SOMMERER, Yannick, 31060 TOULOUSE (FR); ZEBIAN, Maxime, 31060 TOULOUSE (FR)
(74) Mandataire: Cabinet Le Guen Maillet

(56) Documents cités:
- EP-B1- 2 851 300
- US-A1- 2020 240 361

## Description

### DOMAINE TECHNIQUE

La présente invention concerne un ensemble propulsif pour aéronef comprenant deux dispositifs de carénage, un système de ventilation assurant la ventilation de compartiments délimités à l'intérieur de chaque dispositif de carénage et un système anti-incendie.

L'invention concerne également un aéronef équipé d'un tel ensemble propulsif.

### ÉTAT DE LA TECHNIQUE ANTÉRIEURE

Dans l'ensemble de la présente description, les directions « amont » et « aval » sont définies par rapport au sens global de l'écoulement des gaz dans la turbomachine, et les termes « avant » et « arrière » sont à considérer par rapport à une direction F d'avancement de l'aéronef sous l'effet de la poussée exercée par le turboréacteur, cette direction étant parallèle à un axe longitudinal X de l'ensemble propulsif et du turboréacteur.

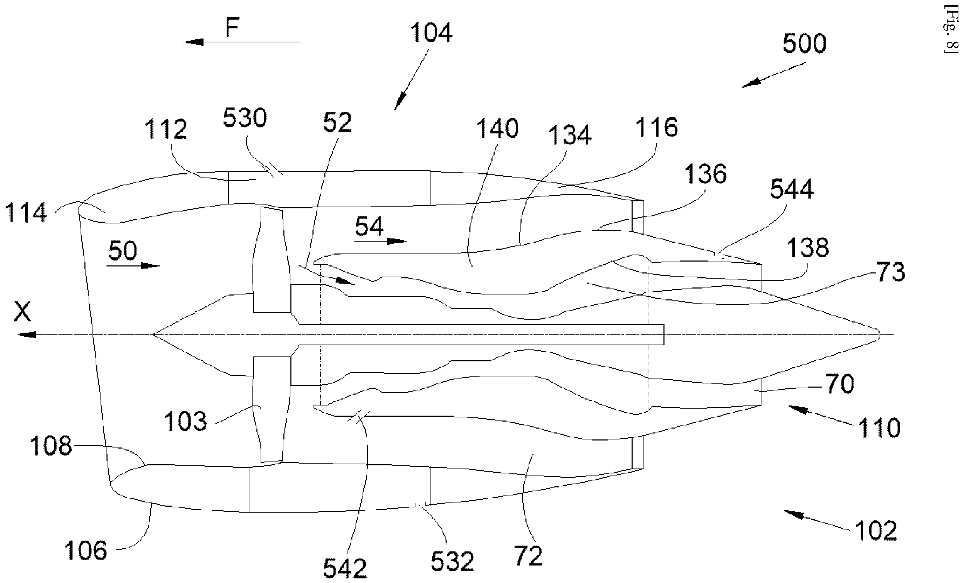

La Fig. 8 montre une section axiale d'un ensemble propulsif 500 de l'état de la technique qui présente un turboréacteur 102 à double flux avec une soufflante 103 et un dispositif de carénage extérieur 104 qui entoure le turboréacteur 102.

Le carénage extérieur 104 comporte une paroi annulaire externe 106 et une paroi annulaire interne 108. La paroi annulaire externe 106 forme un carénage extérieur le long duquel s'écoule l'air extérieur. La paroi annulaire interne 108 canalise un flux d'air entrant 50 alimentant le turboréacteur 102 et qui se divise en aval de la soufflante 103 en un flux primaire 52 et en un flux secondaire 54.

Le flux primaire 52 s'écoule à l'intérieur du coeur 110 qui comporte ici successivement, dans le sens d'écoulement du flux primaire 52, une chambre de compression, une chambre de combustion, et une chambre de turbine. Le flux primaire 52 s'évacue par la tuyère 70.

Le flux secondaire 54 s'écoule autour du coeur 110 dans une veine secondaire 72 et le flux primaire 52 s'écoule à l'intérieur du coeur 110 dans une veine primaire 73.

Les parois annulaires externe 106 et interne 108 délimitent entre-elles un compartiment extérieur 112 du dispositif de carénage extérieur 104, également dénommé « compartiment de soufflante » et qui se positionne entre une manche d'entrée d'air 114 et un inverseur de poussée 116.

Ce compartiment extérieur 112 contient des équipements qui pour certains doivent être ventilés et ainsi maintenus sous une température déterminée.

Pour assurer la ventilation du compartiment extérieur 112 et des équipements éventuellement logés dans celui-ci, le dispositif de carénage extérieur 104 comporte un orifice d'admission d'air 530 ainsi qu'un orifice d'échappement d'air 532 formés dans la paroi annulaire externe 106 du compartiment extérieur 112. Ces deux orifices 530 et 532 sont en général diamétralement opposés par rapport à l'axe longitudinal X. L'orifice d'admission d'air 530 prend généralement la forme d'une écope qui permet l'aspiration de l'air extérieur à l'intérieur du compartiment extérieur 112 et l'orifice d'échappement d'air 532 prend généralement la forme d'une grille qui permet l'aspiration de l'air vers l'extérieur.

Le flux d'air ainsi admis dans le compartiment extérieur 112 forme alors un flux de ventilation circulant dans le compartiment extérieur 112 pour finir par en sortir au travers de l'orifice d'échappement d'air 532 et ainsi ventiler et refroidir l'intérieur du compartiment extérieur 112 et les équipements présents.

Sur l'intérieur, le flux secondaire 54 s'écoule le long d'un dispositif de carénage intérieur 134 comprenant une paroi annulaire externe 136 et une paroi annulaire interne 138 délimitant entre elles un compartiment intérieur 140, couramment dénommé « compartiment de coeur » et la paroi annulaire externe 136 est parfois dénommée «IFS» (« Inner Fixed Structure »).

La veine secondaire 72 est délimitée entre la paroi annulaire externe 136 du carénage intérieur 134 et la paroi annulaire interne 108 du carénage extérieur 104. La veine primaire 73 est délimitée à l'intérieur de la paroi annulaire interne 138 du carénage intérieur 134.

Comme précédemment, le compartiment intérieur 140 doit être ventilé et, à cette fin, la paroi annulaire externe 136 comporte une ou plusieurs fenêtres d'admission d'air 542 et une ou plusieurs fenêtres d'échappement d'air 544 qui sont réparties autour de l'axe longitudinal X. Chaque fenêtre d'admission d'air 542 permet l'admission de l'air du flux secondaire 54 dans le compartiment intérieur 140 et chaque fenêtre d'échappement d'air 544 permet le rejet de l'air du compartiment intérieur 140 vers l'extérieur.

Comme pour les orifices 530 et 532, les fenêtres 542 et 544 prennent par exemple la forme d'écopes ou d'une ouverture annulaire.

Ce mode de ventilation passif donne de bons résultats. Cependant, en croisière, l'apport d'air frais peut être excessif par rapport aux besoins réels et durant les phases de roulage, l'apport d'air frais peut être insuffisant. Pour répondre à ce dernier point, les orifices peuvent être dimensionnés sur cette phase de roulage ce qui va générer une surventilation des compartiments en vol et engendrer une consommation supplémentaire de carburant.

En outre, en cas d'incendie, il est connu de mettre en place un système anti-incendie qui comporte un réservoir contenant un fluide extincteur et des canalisations qui permettent de canaliser le fluide extincteur du réservoir vers le compartiment extérieur 112 et le compartiment intérieur 140. Le fluide extincteur est généralement le produit connu sous la dénomination « Halon ». Par respect des contraintes environnementales, le Halon doit être remplacé par de nouveaux fluides extincteurs qui nécessitent des volumes de stockage plus importants pour une efficacité équivalente au Halon. Le document US2020/240361A divulgue un ensemble propulsif pour un aéronef avec un système anti-incendie selon l'état de la technique.

Il est donc souhaitable de trouver un agencement qui permet d'assurer la ventilation dans les compartiments, tout en optimisant les débits d'admission aux besoins réels de ventilation de chaque phase de vol et qui est associé à un système anti-incendie plus compact.

### EXPOSÉ DE L'INVENTION

Un objet de la présente invention est de proposer un ensemble propulsif pour un aéronef qui comporte deux dispositifs de carénage et un système de ventilation assurant la ventilation de compartiments délimités à l'intérieur de chaque dispositif de carénage.

À cet effet, est proposé un ensemble propulsif pour un aéronef et l'ensemble propulsif comporte :
- une veine primaire et une veine secondaire,
- un carénage extérieur comportant une paroi annulaire externe et une paroi annulaire interne délimitant entre elles un compartiment extérieur, où la paroi annulaire externe comporte une bouche d'entrée,
- un carénage intérieur comportant une paroi annulaire externe et une paroi annulaire interne délimitant entre elles un compartiment intérieur, où la paroi annulaire externe comporte au moins une fenêtre d'échappement d'air,
   où la veine secondaire est délimitée entre la paroi annulaire interne du carénage extérieur et la paroi annulaire externe du carénage intérieur,
   où la veine primaire est délimitée à l'intérieur de la paroi annulaire interne du carénage intérieur,
   ledit ensemble propulsif étant caractérisé en ce qu'il comporte en outre :
      - un système d'aspiration comportant une entrée, une sortie et des éléments mobiles prévus pour aspirer de l'air par l'entrée et refouler l'air aspiré par la sortie,
      - un moyen d'entraînement prévu pour entraîner les éléments mobiles,
      - une canalisation de transfert fluidiquement connectée à la sortie du système d'aspiration,
      - une canalisation de distribution disposée dans le compartiment intérieur, fluidiquement connectée à la canalisation de transfert, et comportant une pluralité de buses,
      - une canalisation d'apport dont une extrémité débouche dans le compartiment extérieur et dont l'autre extrémité est fluidiquement connectée à l'entrée du système d'aspiration,
      - un moyen de régulation arrangé pour réguler le débit d'air dans le système d'aspiration, et
      - un système anti-incendie comportant un réservoir contenant un fluide extincteur, une canalisation de décharge dont une première extrémité est fluidiquement connectée au réservoir, et un système de commande intercalé entre le réservoir et la canalisation de décharge qui prend alternativement une position fermée empêchant l'écoulement du fluide extincteur dans la canalisation de décharge ou une position ouverte autorisant l'écoulement du fluide extincteur dans la canalisation de décharge, et où une deuxième extrémité de la canalisation de décharge débouche directement dans la canalisation de transfert pour l'alimenter, lorsque le système de commande est en position ouverte.

À cet effet, est également proposé un ensemble propulsif pour un aéronef et l'ensemble propulsif comporte :
- une veine primaire et une veine secondaire,
- un carénage extérieur comportant une paroi annulaire externe et une paroi annulaire interne délimitant entre elles un compartiment extérieur, où la paroi annulaire externe comporte une bouche d'entrée,
- un carénage intérieur comportant une paroi annulaire externe et une paroi annulaire interne délimitant entre elles un compartiment intérieur, où la paroi annulaire externe comporte au moins une fenêtre d'échappement d'air,
   où la veine secondaire est délimitée entre la paroi annulaire interne du carénage extérieur et la paroi annulaire externe du carénage intérieur,
   où la veine primaire est délimitée à l'intérieur de la paroi annulaire interne du carénage intérieur,
   ledit ensemble propulsif étant caractérisé en ce qu'il comporte en outre :
      - un système d'aspiration comportant une entrée, une sortie et des éléments mobiles prévus pour aspirer de l'air par l'entrée et refouler l'air aspiré par la sortie,
      - un moyen d'entraînement prévu pour entraîner les éléments mobiles,
      - une canalisation de transfert fluidiquement connectée à la sortie du système d'aspiration,
      - une canalisation de distribution disposée dans le compartiment intérieur, fluidiquement connectée à la canalisation de transfert, et comportant une pluralité de buses,
      - une canalisation d'apport dont une extrémité débouche dans le compartiment extérieur et dont l'autre extrémité est fluidiquement connectée à l'entrée du système d'aspiration,
      - un moyen de régulation arrangé pour réguler le débit d'air dans le système d'aspiration, et
      - un système anti-incendie comportant un réservoir contenant un fluide extincteur, une canalisation de décharge dont une première extrémité est fluidiquement connectée au réservoir, et un système de commande intercalé entre le réservoir et la canalisation de décharge qui prend alternativement une position fermée empêchant l'écoulement du fluide extincteur dans la canalisation de décharge ou une position ouverte autorisant l'écoulement du fluide extincteur dans la canalisation de décharge, et où une deuxième extrémité de la canalisation de décharge débouche directement dans le compartiment extérieur pour alimenter la canalisation de transfert, lorsque le système de commande est en position ouverte.

Dans chacun de ces deux modes de réalisation, l'air extérieur est alors entraîné par le système d'aspiration et parcourt de manière forcée les deux compartiments et le système anti-incendie utilise la canalisation de transfert et la canalisation de distribution pour diffuser le produit extincteur au sein des compartiments concernés. Le débit de ventilation dans les compartiments concernés en cas d'incendie est alors important et la quantité de produit extincteur peut donc être moindre pour une même efficacité car ce débit important permet un apport rapide et en forte concentration du produit extincteur.

Avantageusement, le système anti-incendie comporte en outre, une sous-canalisation de décharge dont une première extrémité débouche dans la canalisation de décharge et dont une deuxième extrémité débouche dans le compartiment extérieur.

Avantageusement, le système de commande comporte un premier sous-système de commande et un deuxième sous-système de commande, où le premier sous-système de commande commande l'écoulement du fluide extincteur dans la canalisation de décharge et où le deuxième sous-système de commande commande l'écoulement du fluide extincteur dans la sous-canalisation de décharge.

L'invention propose également un aéronef comportant au moins un ensemble propulsif selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef comportant un ensemble propulsif selon l'invention,
[Fig. 2] est une coupe axiale d'un ensemble propulsif selon un premier mode de réalisation de l'invention,
[Fig. 3] est une coupe axiale d'un ensemble propulsif selon un deuxième mode de réalisation de l'invention,
[Fig. 4] est une représentation schématique du système anti-incendie selon un premier mode de réalisation de l'invention,
[Fig. 5] est une représentation schématique du système anti-incendie selon un deuxième mode de réalisation de l'invention,
[Fig. 6] est une représentation schématique du système anti-incendie selon un troisième mode de réalisation de l'invention,
[Fig. 7] est une représentation schématique du système anti-incendie selon un quatrième mode de réalisation de l'invention, et
[Fig. 8] est une coupe axiale d'un ensemble propulsif de l'état de la technique.

### EXPOSÉ DÉTAILLÉ DE MODES DE RÉALISATION

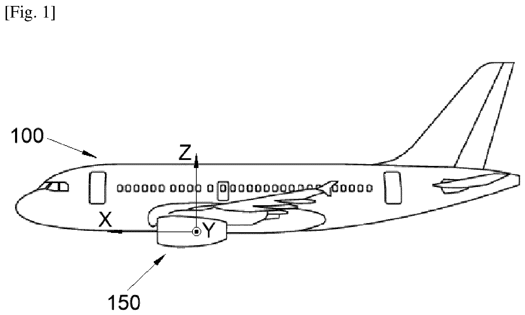

La Fig. 1 montre un aéronef 100 qui présente un ensemble propulsif 150 selon l'invention qui comporte un turboréacteur double flux.

Dans la description qui suit, et par convention, on appelle X la direction longitudinale de l'ensemble propulsif et du turboréacteur orientée positivement dans le sens d'avancement de l'aéronef 100, on appelle Y la direction transversale de l'ensemble propulsif et du turboréacteur qui est horizontale lorsque l'aéronef est au sol, et Z la direction verticale ou hauteur verticale lorsque l'aéronef est au sol, ces trois directions X, Y et Z étant orthogonales entre elles.

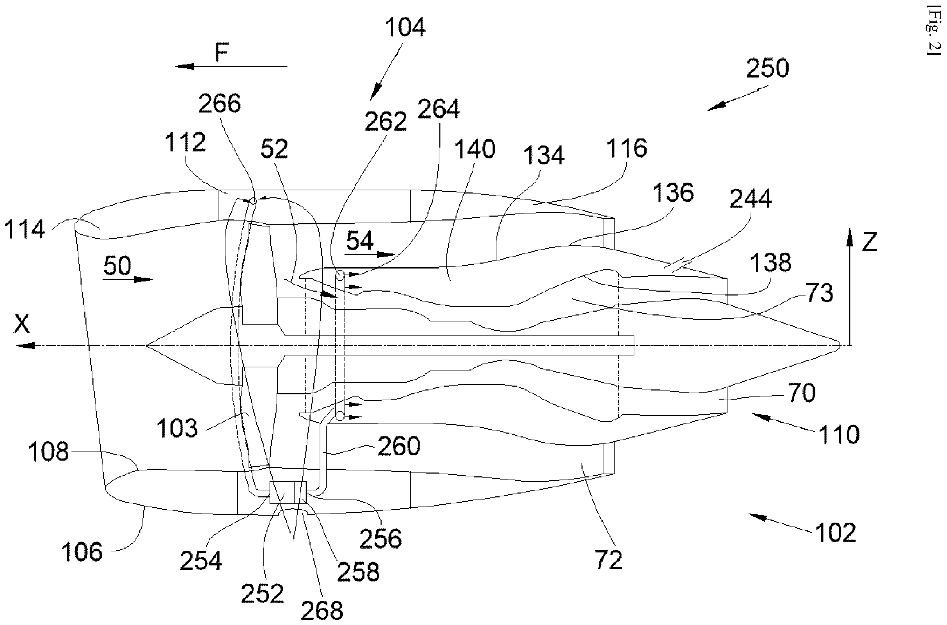

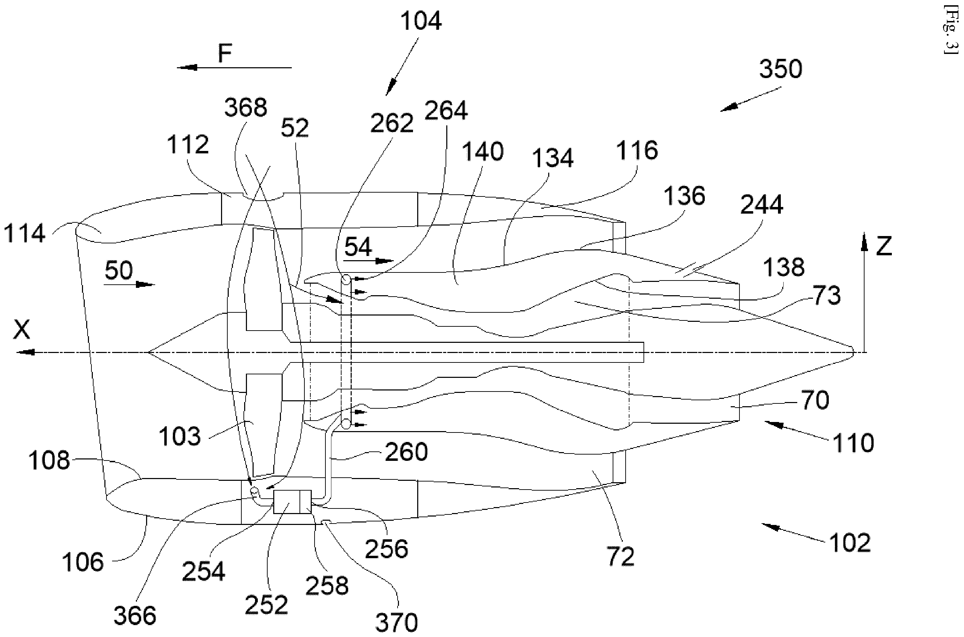

La Fig. 2 montre un ensemble propulsif 250 selon un premier mode de réalisation de l'invention et la Fig. 3 montre un ensemble propulsif 350 selon un deuxième mode de réalisation de l'invention.

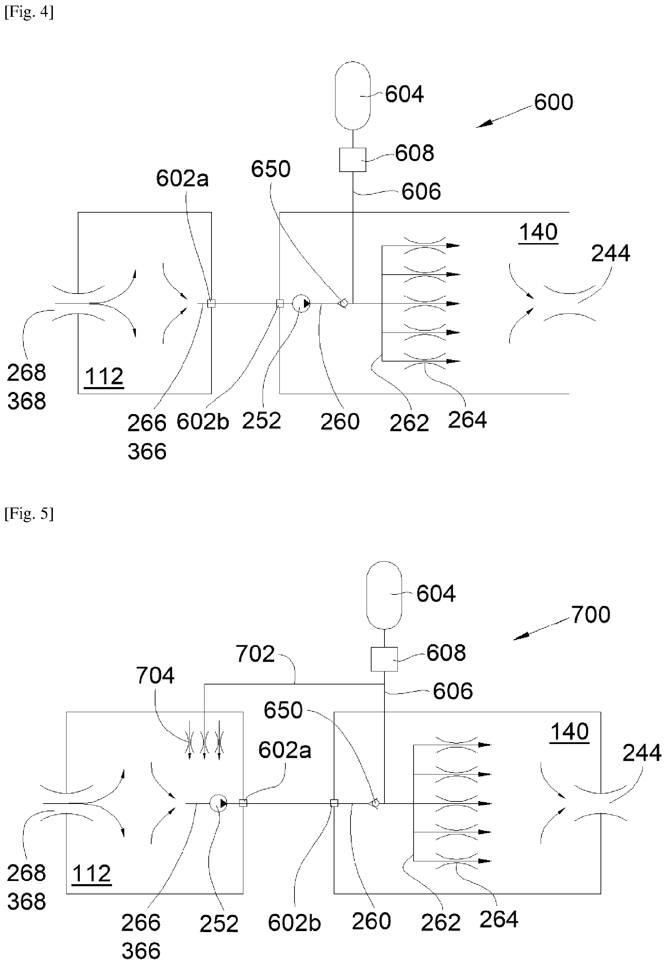

L'ensemble propulsif 250, 350 selon l'invention est similaire à l'ensemble propulsif 500 de l'état de la technique et les éléments communs à l'ensemble propulsif 500 de la Fig. 4 et aux ensembles propulsifs 250 et 350 selon l'invention portent les mêmes références.

L'ensemble propulsif 250, 350 comporte un système d'aspiration 252 comportant une entrée 254 et une sortie 256 et des éléments mobiles, comme par exemple les pales d'une pompe ou d'un compresseur, qui sont prévus, lorsqu'ils se déplacent, pour aspirer l'air par l'entrée 254 et refouler l'air aspiré par la sortie 256.

L'ensemble propulsif 250, 350 comporte également un moyen d'entraînement 258 qui entraîne en mouvement les éléments mobiles et ainsi fait fonctionner le système d'aspiration 252, pour lui faire aspirer et refouler l'air. Ce moyen d'entraînement 258 est par exemple un moteur électrique ou une boîte de vitesse reliant par des arbres de transmission un rotor du turboréacteur 102 aux éléments mobiles.

L'ensemble propulsif 250, 350 comporte également une canalisation de transfert 260 fluidiquement connectée à la sortie 256 du système d'aspiration 252.

L'ensemble propulsif 250, 350 comporte également une canalisation de distribution 262 qui est disposée dans le compartiment intérieur 140 et qui est fluidiquement connectée à la canalisation de transfert 260. La canalisation de distribution 262 comporte une pluralité de buses 264 permettant la sortie de l'air de la canalisation de distribution 262 vers l'intérieur du compartiment intérieur 140.

La paroi annulaire externe 136 du compartiment intérieur 140 comporte au moins une fenêtre d'échappement d'air 244 en liaison entre le compartiment intérieur 140 et l'extérieur et qui permet le rejet de l'air du compartiment intérieur 140 vers l'extérieur. Ainsi, l'air qui arrive par les buses 264 traverse le compartiment intérieur 140 et sort par la fenêtre d'échappement d'air 244.

L'ensemble propulsif 250, 350 comporte également une canalisation d'apport 266, 366 dont une extrémité débouche dans le compartiment extérieur 112 et dont l'autre extrémité est fluidiquement connectée à l'entrée 254 du système d'aspiration 252.

L'ensemble propulsif 250, 350 comporte également une bouche d'entrée 268, 368 qui traverse la paroi annulaire externe 106 du compartiment extérieur 112 pour permettre l'introduction de l'air extérieur dans ledit compartiment extérieur 112. La bouche d'entrée 268, 368 est en liaison entre le compartiment extérieur 112 et l'extérieur.

Ainsi, lorsque le système d'aspiration 252 est en fonctionnement, il crée une dépression dans le compartiment extérieur 112 ce qui oblige l'air extérieur à pénétrer dans ledit compartiment extérieur 112 par la bouche d'entrée 268, 368. L'air pénètre alors dans la canalisation d'apport 266, 366 pour traverser le système d'aspiration 252 et être expulsé vers la canalisation de distribution 262 puis le compartiment intérieur 140 où l'air sort vers l'extérieur par la fenêtre d'échappement d'air 244.

Pour réguler le débit d'air, l'ensemble propulsif 250, 350 comporte un moyen de régulation qui régule le débit d'air dans le système d'aspiration 252.

Selon un mode de réalisation particulier, le moyen de régulation peut être passif et prendre par exemple la forme d'une vanne montée sur la canalisation d'apport 266, 366 et qui fonctionne en ouverture/fermeture en fonction de la pression dans ladite canalisation d'apport 266, 366. Selon un autre exemple de réalisation, le moyen de régulation peut être un caloduc associé à un système de régulation mécanique, du type vanne, où le caloduc transporte une information de température d'au moins un des compartiments 112, 140 au système de régulation mécanique.

Selon un autre mode de réalisation particulier, le moyen de régulation peut être actif et il prend la forme d'une unité de contrôle et de capteurs, où l'unité de contrôle commande le moyen d'entraînement 258 pour accélérer ou ralentir les éléments mobiles du système d'aspiration 252 en fonction des besoins de l'aéronef 100, et en particulier, en fonction d'informations, en particulier d'informations de température, délivrées par les capteurs répartis dans l'ensemble propulsif 150, 250, 350.

La ventilation forcée créée par la présence du système d'aspiration 252 peut ainsi être régulée en fonction des besoins de l'aéronef 100. En outre, dans la mesure où la ventilation est forcée, la bouche d'entrée 268, 368 n'a pas besoin de prendre la forme d'une écope, et il peut s'agir uniquement d'un trou qui reste à fleur de la paroi annulaire externe 106 et n'engendre qu'une traînée supplémentaire très limitée. En outre, un seul système d'aspiration permet de ventiler et refroidir les deux compartiments.

Dans le cas d'un moyen de régulation actif, l'ensemble propulsif 150 peut ainsi comporter par exemple au moins un capteur de température qui mesure la température d'un équipement à surveiller dans le compartiment intérieur 140 ou le compartiment extérieur 112 et qui est en liaison avec l'unité de contrôle et selon un seuil de température prédéfini, l'unité de contrôle va commander le moyen d'entraînement 258 pour accélérer ou ralentir le système d'aspiration 252.

L'unité de contrôle comprend par exemple, reliés par un bus de communication : un processeur ou CPU (« Central Processing Unit » en anglais) ; une mémoire vive RAM (« Random Access Memory » en anglais) ; une mémoire morte ROM (« Read Only Memory » en anglais) ; une unité de stockage telle qu'un disque dur ou un lecteur de support de stockage, tel qu'un lecteur de cartes SD (« Secure Digital » en anglais) ; au moins une interface de communication, permettant à l'unité de contrôle de communiquer entre autres avec le système d'aspiration 252 et les capteurs. L'interface de communication permet également de communiquer avec le système de régulation et de surveillance du moteur (également appelé « FADEC » dans le métier) qui recueille les données relatives à la détection incendie et déclenche si nécessaire les procédures d'extinction.

Le processeur CPU est capable d'exécuter des instructions chargées dans la mémoire RAM à partir de la mémoire ROM, d'une mémoire externe (non représentée), d'un support de stockage (tel qu'une carte SD), ou d'un réseau de communication (non représenté). Lorsque le contrôleur C est mis sous tension, le processeur CPU est capable de lire de la mémoire RAM des instructions et de les exécuter. Ces instructions forment un programme d'ordinateur causant l'implémentation, par le processeur CPU, de tout ou partie de l'algorithme et des étapes décrites ici.

Afin d'assurer un meilleur brassage de l'air dans le compartiment extérieur 112, la bouche d'entrée 268, 368 et l'extrémité ouverte de la canalisation d'apport 266, 366 qui débouche dans le compartiment extérieur 112 sont diamétralement opposées par rapport à l'axe longitudinal X. Ainsi, l'air qui pénètre par la bouche d'entrée 268, 368 doit parcourir la moitié du compartiment extérieur 112, pour une partie du flux d'air par bâbord, et pour une autre partie du flux par tribord, pour rejoindre l'extrémité de la canalisation d'apport 266, 366.

Dans le mode de réalisation de la Fig. 2, la bouche d'entrée 268 est en partie basse de l'ensemble propulsif 250 et l'extrémité ouverte de la canalisation d'apport 266 est disposée en partie haute de l'ensemble propulsif 250.

La bouche d'entrée 268 peut ainsi servir également d'ouverture de drainage pour évacuer les liquides qui pourraient se trouver dans le compartiment extérieur 112.

Dans ce mode de réalisation, le système d'aspiration 252 est en partie basse du compartiment extérieur 112 et la canalisation d'apport 266 parcourt alors la moitié du compartiment extérieur 112.

Dans le mode de réalisation de la Fig. 3, la bouche d'entrée 368 est en partie haute de l'ensemble propulsif 350 et l'extrémité ouverte de la canalisation d'apport 366 est disposée en partie basse de l'ensemble propulsif 350.

En partie basse de l'ensemble propulsif 350, une bouche additionnelle 370 est alors prévue à travers la paroi annulaire externe 106 du compartiment extérieur 112 pour assurer le drainage de liquides qui pourraient se trouver dans le compartiment extérieur 112.

Dans ce mode de réalisation, le système d'aspiration 252 est en partie basse du compartiment extérieur 112 et la canalisation d'apport 366 est relativement courte.

Pour faciliter la circulation de l'air dans le compartiment intérieur 140, la canalisation de distribution 262 et les buses 264 sont à l'avant du compartiment intérieur 140 et la ou chaque fenêtre d'échappement d'air 244 est à l'arrière du compartiment intérieur 140.

Dans le mode de réalisation de l'invention présenté sur les Figs. 2 et 3, la canalisation de distribution 262 prend la forme d'un tore ouvert coaxial avec l'axe longitudinal X, et les buses 264 sont distribuées le long du tore et orientées vers l'arrière pour éjecter l'air vers l'arrière du compartiment intérieur 140.

Dans le mode de réalisation de l'invention présenté sur les Figs. 2 et 3, le système d'aspiration 252 est arrangé dans le compartiment extérieur 112 mais il pourrait être disposé ailleurs comme par exemple dans le compartiment intérieur 140.

Les Figs. 4 à 7 montrent des systèmes anti-incendie 600, 700, 800, 900 selon différents modes de réalisation. Ces différents modes de réalisation peuvent être mis en oeuvre dans un ensemble propulsif 150, 250, 350 selon les différents modes décrits ci-dessus. Dans le mode de réalisation de la Fig. 4, le système d'aspiration 252 est représenté dans le compartiment intérieur 140 mais il pourrait être dans le compartiment extérieur 112. De la même manière, dans les modes de réalisation des Figs. 5 à 7, le système d'aspiration 252 est représenté dans le compartiment extérieur 112 mais il pourrait être dans le compartiment intérieur 140.

Chacune des Figs. 4 à 7 montre le compartiment extérieur 112 avec la bouche d'entrée 268, 368 qui permet l'introduction de l'air extérieur et le compartiment intérieur 140 avec la fenêtre d'échappement d'air 244. Entre les deux compartiments 112 et 140 s'étendent successivement la canalisation d'apport 266, 366 et la canalisation de transfert 260 de part et d'autre du système d'aspiration 252, et la canalisation de transfert 260 rejoint la canalisation de distribution 262 qui débouche dans le compartiment intérieur 140 par les buses 264.

Les traversées des parois du compartiment extérieur 112 et du compartiment intérieur 140 par la canalisation d'apport 266, 366 et la canalisation de transfert 260 s'effectuent ici à travers des passes cloisons 602a-b.

Dans chacun des modes de réalisation des Figs. 4 à 7, le système anti-incendie 600, 700, 800, 900 comporte un réservoir 604 contenant un fluide extincteur, une canalisation de décharge 606 dont une première extrémité est fluidiquement connectée au réservoir 604, et un système de commande 608 intercalé entre le réservoir 604 et la canalisation de décharge 606 qui prend alternativement une position fermée empêchant l'écoulement du fluide extincteur dans la canalisation de décharge 606 depuis le réservoir 604 ou une position ouverte autorisant l'écoulement du fluide extincteur dans la canalisation de décharge 606 depuis le réservoir 604. Le système de commande 608 est commandé par exemple par l'unité de contrôle.

Le système de commande 608 est par exemple une vanne commandée ou une tête de décharge qui comporte un opercule qui ferme le réservoir 604 et une cartouche explosive qui détruit l'opercule lorsqu'elle est activée.

La deuxième extrémité de la canalisation de décharge 606 est arrangée pour alimenter la canalisation de transfert 260, lorsque le système de commande 608 est en position ouverte.

Ainsi, le fluide extincteur se déverse dans le compartiment intérieur 140 en utilisant la canalisation de transfert 260, ce qui permet un gain en composants.

Dans le mode de réalisation de la Fig. 4, la deuxième extrémité de la canalisation de décharge 606 débouche directement dans la canalisation de transfert 260, en amont des buses 264. Ici, la canalisation de décharge 606 traverse le compartiment intérieur 140, mais selon la position du système d'aspiration 252, la canalisation de décharge 606 peut rejoindre la canalisation de transfert 260 hors du compartiment intérieur 140. Dans ce mode de réalisation, le compartiment intérieur 140 est considéré comme une zone potentiellement inflammable, et le compartiment extérieur 112 n'est pas considéré comme une zone potentiellement inflammable.

Dans le mode de réalisation de la Fig. 5, qui est une variante du mode de réalisation de la Fig. 4, le système anti-incendie 700 comporte en outre, une sous-canalisation de décharge 702 dont une première extrémité débouche dans la canalisation de décharge 606 et dont une deuxième extrémité débouche dans le compartiment extérieur 112. Ainsi, le fluide extincteur se répartit dans les deux compartiments 112 et 140. En outre, le fluide extincteur qui est envoyé vers le compartiment extérieur 112 rejoint ensuite le compartiment intérieur 140 à travers la canalisation d'apport 266, 366 et la canalisation de transfert 260. Dans ce mode de réalisation, le compartiment intérieur 140 et le compartiment extérieur 112 sont considérés comme des zones potentiellement inflammables. La deuxième extrémité de la sous-canalisation de décharge 702 débouche ici par l'intermédiaire de buses 704.

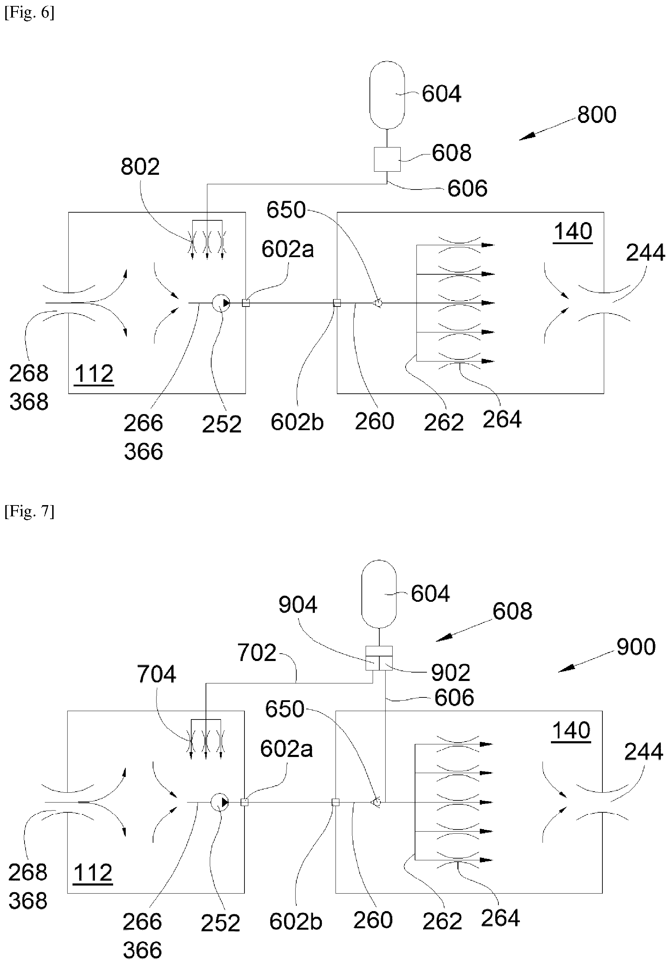

Dans le mode de réalisation de la Fig. 6, la deuxième extrémité de la canalisation de décharge 606 débouche directement dans le compartiment extérieur 112, ici par l'intermédiaire de buses 802. Le fluide extincteur qui est ainsi envoyé vers le compartiment extérieur 112 rejoint ensuite le compartiment intérieur 140 à travers la canalisation d'apport 266, 366 et la canalisation de transfert 260. Dans ce mode de réalisation, le compartiment intérieur 140 et le compartiment extérieur 112 sont considérés comme des zones potentiellement inflammables.

Le mode de réalisation de la Fig. 7 est une variante du mode de réalisation de la Fig. 5, dans lequel le système de commande 608 comporte un premier sous-système de commande 902 et un deuxième sous-système de commande 904, où le premier sous-système de commande 902 commande l'écoulement du fluide extincteur dans la canalisation de décharge 606 et où le deuxième sous-système de commande 904 commande l'écoulement du fluide extincteur dans la sous-canalisation de décharge 702. Le premier sous-système de commande 902 et le deuxième sous-système de commande 904 peuvent être commandés de manière indépendante pour permettre l'écoulement dans la canalisation de décharge 606 ou la sous-canalisation de décharge 702 ou les deux. Dans ce mode de réalisation, le compartiment intérieur 140 et le compartiment extérieur 112 sont considérés comme des zones potentiellement inflammables.

Dans chacun des modes des Figs. 4 à 7, l'ensemble propulsif comporte un clapet anti-retour 650 qui est arrangé sur la canalisation de transfert 260 entre le système d'aspiration 252 et les buses 264, et plus précisément, lorsque la deuxième extrémité de la canalisation de décharge 606 débouche directement dans la canalisation de transfert 260, le clapet anti-retour 650 est arrangé sur la canalisation de transfert 260 entre ladite deuxième extrémité et les buses 264 pour empêcher le reflux de l'air et du fluide extincteur vers le système d'aspiration 252 et le compartiment extérieur 112.

## Revendications

1. Ensemble propulsif (150, 250, 350) pour un aéronef (100), ledit ensemble propulsif (150, 250, 350) comporte :
- une veine primaire (73) et une veine secondaire (72),
- un carénage extérieur (104) comportant une paroi annulaire externe (106) et une paroi annulaire interne (108) délimitant entre elles un compartiment extérieur (112), où la paroi annulaire externe (106) comporte une bouche d'entrée (268, 368),
- un carénage intérieur (134) comportant une paroi annulaire externe (136) et une paroi annulaire interne (138) délimitant entre elles un compartiment intérieur (140), où la paroi annulaire externe (136) comporte au moins une fenêtre d'échappement d'air (244),
où la veine secondaire (72) est délimitée entre la paroi annulaire interne (108) du carénage extérieur (104) et la paroi annulaire externe (136) du carénage intérieur (134),
où la veine primaire (73) est délimitée à l'intérieur de la paroi annulaire interne (138) du carénage intérieur (134),
ledit ensemble propulsif (150, 250, 350) étant **caractérisé en ce qu'**il comporte en outre :
- un système d'aspiration (252) comportant une entrée (254), une sortie (256) et des éléments mobiles prévus pour aspirer de l'air par l'entrée (254) et refouler l'air aspiré par la sortie (256),
- un moyen d'entraînement (258) prévu pour entraîner les éléments mobiles,
- une canalisation de transfert (260) fluidiquement connectée à la sortie (256) du système d'aspiration (252),
- une canalisation de distribution (262) disposée dans le compartiment intérieur (140), fluidiquement connectée à la canalisation de transfert (260), et comportant une pluralité de buses (264),
- une canalisation d'apport (266, 366) dont une extrémité débouche dans le compartiment extérieur (112) et dont l'autre extrémité est fluidiquement connectée à l'entrée (254) du système d'aspiration (252),
- un moyen de régulation arrangé pour réguler le débit d'air dans le système d'aspiration (252), et
- un système anti-incendie (600, 700, 900) comportant un réservoir (604) contenant un fluide extincteur, une canalisation de décharge (606) dont une première extrémité est fluidiquement connectée au réservoir (604), et un système de commande (608) intercalé entre le réservoir (604) et la canalisation de décharge (606) qui prend alternativement une position fermée empêchant l'écoulement du fluide extincteur dans la canalisation de décharge (606) ou une position ouverte autorisant l'écoulement du fluide extincteur dans la canalisation de décharge (606), et où une deuxième extrémité de la canalisation de décharge (606) débouche directement dans la canalisation de transfert (260) pour l'alimenter, lorsque le système de commande (608) est en position ouverte.

2. Ensemble propulsif (150, 250, 350) pour un aéronef (100), ledit ensemble propulsif (150, 250, 350) comporte :
- une veine primaire (73) et une veine secondaire (72),
- un carénage extérieur (104) comportant une paroi annulaire externe (106) et une paroi annulaire interne (108) délimitant entre elles un compartiment extérieur (112), où la paroi annulaire externe (106) comporte une bouche d'entrée (268, 368),
- un carénage intérieur (134) comportant une paroi annulaire externe (136) et une paroi annulaire interne (138) délimitant entre elles un compartiment intérieur (140), où la paroi annulaire externe (136) comporte au moins une fenêtre d'échappement d'air (244),
où la veine secondaire (72) est délimitée entre la paroi annulaire interne (108) du carénage extérieur (104) et la paroi annulaire externe (136) du carénage intérieur (134),
où la veine primaire (73) est délimitée à l'intérieur de la paroi annulaire interne (138) du carénage intérieur (134),
ledit ensemble propulsif (150, 250, 350) étant **caractérisé en ce qu'**il comporte en outre :
- un système d'aspiration (252) comportant une entrée (254), une sortie (256) et des éléments mobiles prévus pour aspirer de l'air par l'entrée (254) et refouler l'air aspiré par la sortie (256),
- un moyen d'entraînement (258) prévu pour entraîner les éléments mobiles,
- une canalisation de transfert (260) fluidiquement connectée à la sortie (256) du système d'aspiration (252),
- une canalisation de distribution (262) disposée dans le compartiment intérieur (140), fluidiquement connectée à la canalisation de transfert (260), et comportant une pluralité de buses (264),
- une canalisation d'apport (266, 366) dont une extrémité débouche dans le compartiment extérieur (112) et dont l'autre extrémité est fluidiquement connectée à l'entrée (254) du système d'aspiration (252),
- un moyen de régulation arrangé pour réguler le débit d'air dans le système d'aspiration (252), et
- un système anti-incendie (800) comportant un réservoir (604) contenant un fluide extincteur, une canalisation de décharge (606) dont une première extrémité est fluidiquement connectée au réservoir (604), et un système de commande (608) intercalé entre le réservoir (604) et la canalisation de décharge (606) qui prend alternativement une position fermée empêchant l'écoulement du fluide extincteur dans la canalisation de décharge (606) ou une position ouverte autorisant l'écoulement du fluide extincteur dans la canalisation de décharge (606), et où une deuxième extrémité de la canalisation de décharge (606) débouche directement dans le compartiment extérieur (112) pour alimenter la canalisation de transfert (260), lorsque le système de commande (608) est en position ouverte.

3. Ensemble propulsif (150, 250, 350) selon la revendication 1, **caractérisé en ce que** le système anti-incendie (700, 900) comporte en outre, une sous-canalisation de décharge (702) dont une première extrémité débouche dans la canalisation de décharge (606) et dont une deuxième extrémité débouche dans le compartiment extérieur (112).

4. Ensemble propulsif (150, 250, 350) selon la revendication 3, **caractérisé en ce que** le système de commande (608) comporte un premier sous-système de commande (902) et un deuxième sous-système de commande (904), où le premier sous-système de commande (902) commande l'écoulement du fluide extincteur dans la canalisation de décharge (606) et où le deuxième sous-système de commande (904) commande l'écoulement du fluide extincteur dans la sous-canalisation de décharge (702).

5. Aéronef (100) comportant au moins un ensemble propulsif (150, 250, 350) selon l'une des revendications précédentes.

## Patentansprüche

1. Antriebseinheit (150, 250, 350) für ein Luftfahrzeug (100), wobei die Antriebseinheit (150, 250, 350) umfasst:
- einen Primärstromkanal (73) und einen Sekundärstromkanal (72),
- eine Außenverkleidung (104), die eine ringförmige Außenwand (106) und eine ringförmige Innenwand (108) umfasst, die zwischen sich ein äußeres Abteil (112) begrenzen, wobei die ringförmige Außenwand (106) eine Einlassöffnung (268, 368) umfasst,
- eine Innenverkleidung (134), die eine ringförmige Außenwand (136) und eine ringförmige Innenwand (138) umfasst, die zwischen sich ein inneres Abteil (140) begrenzen, wobei die ringförmige Außenwand (136) mindestens ein Luftauslassfenster (244) umfasst,
wobei der Sekundärstromkanal (72) zwischen der ringförmigen Innenwand (108) der Außenverkleidung (104) und der ringförmigen Außenwand (136) der Innenverkleidung (134) ausgebildet ist,
wobei der Primärstromkanal (73) innerhalb der ringförmigen Innenwand (138) der Innenverkleidung (134) ausgebildet ist,
wobei die Antriebseinheit (150, 250, 350) **dadurch gekennzeichnet ist, dass** sie außerdem umfasst:
- ein Ansaugsystem (252), das einen Einlass (254), einen Auslass (256) und bewegliche Elemente, die dazu vorgesehen sind, Luft über den Einlass (254) anzusaugen und die angesaugte Luft über den Auslass (256) auszustoßen, umfasst,
- ein Antriebsmittel (258), das dazu vorgesehen ist, die beweglichen Elemente anzutreiben,
- eine Transferleitung (260), die mit dem Auslass (256) des Ansaugsystems (252) in Fluidverbindung steht,
- eine in dem inneren Abteil (140) angeordnete Verteilungsleitung (262), die mit der Transferleitung (260) in Fluidverbindung steht und mehrere Düsen (264) umfasst,
- eine Zufuhrleitung (266, 366), deren eines Ende in das äußere Abteil (112) mündet und deren anderes Ende mit dem Einlass (254) des Ansaugsystems (252) in Fluidverbindung steht,
- ein Regelungsmittel, das dazu eingerichtet ist, den Luftdurchsatz im Ansaugsystem (252) zu regeln, und
- ein Brandschutzsystem (600, 700, 900), umfassend einen Behälter (604), der ein Löschfluid enthält, eine Ablassleitung (606), von der ein erstes Ende mit dem Behälter (604) in Fluidverbindung steht, und ein zwischen dem Behälter (604) und der Ablassleitung (606) angeordnetes Steuerungssystem (608), das alternativ eine geschlossene Position, die das Strömen des Löschfluids in die Ablassleitung (606) verhindert, oder eine geöffnete Position, die das Strömen des Löschfluids in die Ablassleitung (606) ermöglicht, einnimmt, und wobei ein zweites Ende der Ablassleitung (606) direkt in die Transferleitung (260) mündet, um sie zu speisen, wenn sich das Steuerungssystem (608) in der geöffneten Position befindet.

2. Antriebseinheit (150, 250, 350) für ein Luftfahrzeug (100), wobei die Antriebseinheit (150, 250, 350) umfasst:
- einen Primärstromkanal (73) und einen Sekundärstromkanal (72),
- eine Außenverkleidung (104), die eine ringförmige Außenwand (106) und eine ringförmige Innenwand (108) umfasst, die zwischen sich ein äußeres Abteil (112) begrenzen, wobei die ringförmige Außenwand (106) eine Einlassöffnung (268, 368) umfasst,
- eine Innenverkleidung (134), die eine ringförmige Außenwand (136) und eine ringförmige Innenwand (138) umfasst, die zwischen sich ein inneres Abteil (140) begrenzen, wobei die ringförmige Außenwand (136) mindestens ein Luftauslassfenster (244) umfasst,
wobei der Sekundärstromkanal (72) zwischen der ringförmigen Innenwand (108) der Außenverkleidung (104) und der ringförmigen Außenwand (136) der Innenverkleidung (134) ausgebildet ist,
wobei der Primärstromkanal (73) innerhalb der ringförmigen Innenwand (138) der Innenverkleidung (134) ausgebildet ist,
wobei die Antriebseinheit (150, 250, 350) **dadurch gekennzeichnet ist, dass** sie außerdem umfasst:
- ein Ansaugsystem (252), das einen Einlass (254), einen Auslass (256) und bewegliche Elemente, die dazu vorgesehen sind, Luft über den Einlass (254) anzusaugen und die angesaugte Luft über den Auslass (256) auszustoßen, umfasst,
- ein Antriebsmittel (258), das dazu vorgesehen ist, die beweglichen Elemente anzutreiben,
- eine Transferleitung (260), die mit dem Auslass (256) des Ansaugsystems (252) in Fluidverbindung steht,
- eine in dem inneren Abteil (140) angeordnete Verteilungsleitung (262), die mit der Transferleitung (260) in Fluidverbindung steht und mehrere Düsen (264) umfasst,
- eine Zufuhrleitung (266, 366), deren eines Ende in das äußere Abteil (112) mündet und deren anderes Ende mit dem Einlass (254) des Ansaugsystems (252) in Fluidverbindung steht,
- ein Regelungsmittel, das dazu eingerichtet ist, den Luftdurchsatz im Ansaugsystem (252) zu regeln, und
- ein Brandschutzsystem (800), umfassend einen Behälter (604), der ein Löschfluid enthält, eine Ablassleitung (606), von der ein erstes Ende mit dem Behälter (604) in Fluidverbindung steht, und ein zwischen dem Behälter (604) und der Ablassleitung (606) angeordnetes Steuerungssystem (608), das alternativ eine geschlossene Position, die das Strömen des Löschfluids in die Ablassleitung (606) verhindert, oder eine geöffnete Position, die das Strömen des Löschfluids in die Ablassleitung (606) ermöglicht, einnimmt, und wobei ein zweites Ende der Ablassleitung (606) direkt in das äußere Abteil (112) mündet, um die Transferleitung (260) zu speisen, wenn sich das Steuerungssystem (608) in der geöffneten Position befindet.

3. Antriebseinheit (150, 250, 350) nach Anspruch 1, **dadurch gekennzeichnet, dass** das Brandschutzsystem (700, 900) außerdem eine Teilablassleitung (702) umfasst, von der ein erstes Ende in die Ablassleitung (606) mündet und von der ein zweites Ende in das äußere Abteil (112) mündet.

4. Antriebseinheit (150, 250, 350) nach Anspruch 3, **dadurch gekennzeichnet, dass** das Steuerungssystem (608) ein erstes Teilsteuerungssystem (902) und ein zweites Teilsteuerungssystem (904) umfasst, wobei das erste Teilsteuerungssystem (902) das Strömen des Löschfluids in die Ablassleitung (606) steuert und wobei das zweite Teilsteuerungssystem (904) das Strömen des Löschfluids in die Teilablassleitung (702) steuert.

5. Luftfahrzeug (100), welches mindestens eine Antriebseinheit (150, 250, 350) nach einem der vorhergehenden Ansprüche umfasst.

## Claims

1. Propulsion assembly (150, 250, 350) for an aircraft (100), said propulsion assembly (150, 250, 350) having:
- a primary duct (73) and a secondary duct (72),
- an outer fairing (104) having an external annular wall (106) and an internal annular wall (108) that delimit between them an outer compartment (112), wherein the external annular wall (106) has an inlet opening (268, 368),
- an inner fairing (134) having an external annular wall (136) and an internal annular wall (138) that delimit between them an inner compartment (140), wherein the external annular wall (136) has at least one air exhaust aperture (244),
wherein the secondary duct (72) is delimited between the internal annular wall (108) of the outer fairing (104) and the external annular wall (136) of the inner fairing (134),
wherein the primary duct (73) is delimited inside the internal annular wall (138) of the inner fairing (134),
said propulsion assembly (150, 250, 350) being **characterized in that** it also has:
- a suction system (252) having an inlet (254), an outlet (256) and mobile elements that are designed to draw air in via the inlet (254) and deliver the drawn-in air via the outlet (256),
- a drive means (258) designed to drive the mobile elements,
- a transfer pipe (260) fluidically connected to the outlet (256) of the suction system (252),
- a distribution pipe (262) disposed in the inner compartment (140), fluidically connected to the transfer pipe (260) and having a plurality of nozzles (264),
- a supply pipe (266, 366) of which one end opens into the outer compartment (112) and of which the other end is fluidically connected to the inlet (254) of the suction system (252),
- a regulating means arranged so as to regulate the flow rate of air in the suction system (252), and
- a fire-fighting system (600, 700, 900) having a reservoir (604) containing an extinguishing fluid, a discharge pipe (606) of which a first end is fluidically connected to the reservoir (604), and a control system (608) interposed between the reservoir (604) and the discharge pipe (606) that alternately adopts a closed position preventing the extinguishing fluid from flowing into the discharge pipe (606) or an open position allowing the extinguishing fluid to flow into the discharge pipe (606), and wherein a second end of the discharge pipe (606) opens directly into the transfer pipe (260) so as to supply it, when the control system (608) is in the open position.

2. Propulsion assembly (150, 250, 350) for an aircraft (100), said propulsion assembly (150, 250, 350) having:
- a primary duct (73) and a secondary duct (72),
- an outer fairing (104) having an external annular wall (106) and an internal annular wall (108) that delimit between them an outer compartment (112), wherein the external annular wall (106) has an inlet opening (268, 368),
- an inner fairing (134) having an external annular wall (136) and an internal annular wall (138) that delimit between them an inner compartment (140), wherein the external annular wall (136) has at least one air exhaust aperture (244),
wherein the secondary duct (72) is delimited between the internal annular wall (108) of the outer fairing (104) and the external annular wall (136) of the inner fairing (134),
wherein the primary duct (73) is delimited inside the internal annular wall (138) of the inner fairing (134),
said propulsion assembly (150, 250, 350) being **characterized in that** it also has:
- a suction system (252) having an inlet (254), an outlet (256) and mobile elements that are designed to draw air in via the inlet (254) and deliver the drawn-in air via the outlet (256),
- a drive means (258) designed to drive the mobile elements,
- a transfer pipe (260) fluidically connected to the outlet (256) of the suction system (252),
- a distribution pipe (262) disposed in the inner compartment (140), fluidically connected to the transfer pipe (260) and having a plurality of nozzles (264),
- a supply pipe (266, 366) of which one end opens into the outer compartment (112) and of which the other end is fluidically connected to the inlet (254) of the suction system (252),
- a regulating means arranged so as to regulate the flow rate of air in the suction system (252), and
- a fire-fighting system (800) having a reservoir (604) containing an extinguishing fluid, a discharge pipe (606) of which a first end is fluidically connected to the reservoir (604), and a control system (608) interposed between the reservoir (604) and the discharge pipe (606) that alternately adopts a closed position preventing the extinguishing fluid from flowing into the discharge pipe (606) or an open position allowing the extinguishing fluid to flow into the discharge pipe (606), and wherein a second end of the discharge pipe (606) opens directly into the outer compartment (112) so as to supply the transfer pipe (260), when the control system (608) is in the open position.

3. Propulsion assembly (150, 250, 350) according to Claim 1, **characterized in that** the fire-fighting system (700, 900) also has a discharge sub-pipe (702) of which a first end opens into the discharge pipe (606) and of which a second end opens into the outer compartment (112).

4. Propulsion assembly (150, 250, 350) according to Claim 3, **characterized in that** the control system (608) has a first control sub-system (902) and a second control sub-system (904), wherein the first control sub-system (902) controls the flow of the extinguishing fluid into the discharge pipe (606) and wherein the second control sub-system (904) controls the flow of the extinguishing fluid into the discharge sub-pipe (702).

5. Aircraft (100) having at least one propulsion assembly (150, 250, 350) according to one of the preceding claims.
